# EUROPEAN PATENT APPLICATION

(11) **EP 4 618 610 A1**
(43) Date of publication of application: **17.09.2025**
(21) Application number: 25161299.0
(22) Date of filing: 03.03.2025
(51) Int. Cl.: H04W 24/02

(54) **GENERATING MODEL PARAMETERS AND NORMALIZATION STATISTICS BY UTILIZING GENERATIVE ARTIFICIAL INTELLIGENCE**

(30) Priority: 15.03.2024 FI 20245311
(71) Applicant: Nokia Solutions and Networks Oy, 02610 Espoo (FI)
(72) Inventor: SABZEVARI, Maryam, Espoo (FI); HÄTÖNEN, Kimmo Kalervo, Helsinki (FI)
(74) Representative: Nokia EPO representatives

(57) **Abstract**

Disclosed is a method comprising receiving a data stream divided into segments with variable data patterns; detecting a change point in the data stream, the change point corresponding to a shift in the data patterns; generating, based on the detection, by utilizing a generative artificial intelligence model, model parameters and normalization statistics for a machine learning model based on one or more previously learned segments of the data stream, the machine learning model being configured at least to learn from the data stream; updating the machine learning model based on the model parameters and the normalization statistics generated with the generative artificial intelligence model; and performing one or more predictions with the updated machine learning model.

## Description

### TECHNICAL FIELD

The following example embodiments relate to wireless communication and to artificial intelligence.

### BACKGROUND

Data streaming refers to the continuous transmission and processing of data (e.g., over a network) in real-time or near-real-time. It involves the streaming of data packets, messages, or events between different network components or systems. There is a challenge in how to adapt a machine learning model to learn from streaming data in an agile manner.

### SUMMARY

The scope of protection sought for various example embodiments is set out by the claims. The example embodiments and features, if any, described in this specification that do not fall under the scope of the claims are to be interpreted as examples useful for understanding various embodiments.

According to a first aspect, there is provided an apparatus comprising at least one processor, and at least one memory storing instructions that, when executed by the at least one processor, cause the apparatus at least to: receive a data stream divided into segments with variable data patterns, wherein the data stream comprises at least one of: network traffic metrics of a radio access network, spectrum occupancy statistics of the radio access network, interference levels observed in the radio access network, or signal strength measurements associated with the radio access network; detect a change point in the data stream, the change point corresponding to a shift in the data patterns; generate, based on the detection, by utilizing a generative artificial intelligence model, model parameters and normalization statistics for a machine learning model based on one or more previously learned segments of the data stream, the machine learning model being configured at least to learn from the data stream; update the machine learning model based on the model parameters and the normalization statistics generated with the generative artificial intelligence model; and perform one or more predictions with the updated machine learning model, wherein the one or more predictions comprise at least one of: one or more predicted network traffic metrics of the radio access network, one or more predicted occupancy statistics of the radio access network, one or more predicted interference levels expected in the radio access network, one or more predicted signal strength measurements associated with the radio access network, one or more frequency bands for dynamic spectrum allocation, a user prioritization for the dynamic spectrum allocation, or a load balancing recommendation for the dynamic spectrum allocation.

According to a second aspect, there is provided a method comprising: receiving a data stream divided into segments with variable data patterns, wherein the data stream comprises at least one of: network traffic metrics of a radio access network, spectrum occupancy statistics of the radio access network, interference levels observed in the radio access network, or signal strength measurements associated with the radio access network; detecting a change point in the data stream, the change point corresponding to a shift in the data patterns; generating, based on the detection, by utilizing a generative artificial intelligence model, model parameters and normalization statistics for a machine learning model based on one or more previously learned segments of the data stream, the machine learning model being configured at least to learn from the data stream; updating the machine learning model based on the model parameters and the normalization statistics generated with the generative artificial intelligence model; and performing one or more predictions with the updated machine learning model, wherein the one or more predictions comprise at least one of: one or more predicted network traffic metrics of the radio access network, one or more predicted occupancy statistics of the radio access network, one or more predicted interference levels expected in the radio access network, one or more predicted signal strength measurements associated with the radio access network, one or more frequency bands for dynamic spectrum allocation, a user prioritization for the dynamic spectrum allocation, or a load balancing recommendation for the dynamic spectrum allocation.

According to a third aspect, there is provided a computer program comprising instructions which, when executed by an apparatus, cause the apparatus to perform at least the following: receiving a data stream divided into segments with variable data patterns, wherein the data stream comprises at least one of: network traffic metrics of a radio access network, spectrum occupancy statistics of the radio access network, interference levels observed in the radio access network, or signal strength measurements associated with the radio access network; detecting a change point in the data stream, the change point corresponding to a shift in the data patterns; generating, based on the detection, by utilizing a generative artificial intelligence model, model parameters and normalization statistics for a machine learning model based on one or more previously learned segments of the data stream, the machine learning model being configured at least to learn from the data stream; updating the machine learning model based on the model parameters and the normalization statistics generated with the generative artificial intelligence model; and performing one or more predictions with the updated machine learning model, wherein the one or more predictions comprise at least one of: one or more predicted network traffic metrics of the radio access network, one or more predicted occupancy statistics of the radio access network, one or more predicted interference levels expected in the radio access network, one or more predicted signal strength measurements associated with the radio access network, one or more frequency bands for dynamic spectrum allocation, a user prioritization for the dynamic spectrum allocation, or a load balancing recommendation for the dynamic spectrum allocation.

According to a fourth aspect, there is provided a computer readable medium comprising program instructions which, when executed by an apparatus, cause the apparatus to perform at least the following: receiving a data stream divided into segments with variable data patterns, wherein the data stream comprises at least one of: network traffic metrics of a radio access network, spectrum occupancy statistics of the radio access network, interference levels observed in the radio access network, or signal strength measurements associated with the radio access network; detecting a change point in the data stream, the change point corresponding to a shift in the data patterns; generating, based on the detection, by utilizing a generative artificial intelligence model, model parameters and normalization statistics for a machine learning model based on one or more previously learned segments of the data stream, the machine learning model being configured at least to learn from the data stream; updating the machine learning model based on the model parameters and the normalization statistics generated with the generative artificial intelligence model; and performing one or more predictions with the updated machine learning model, wherein the one or more predictions comprise at least one of: one or more predicted network traffic metrics of the radio access network, one or more predicted occupancy statistics of the radio access network, one or more predicted interference levels expected in the radio access network, one or more predicted signal strength measurements associated with the radio access network, one or more frequency bands for dynamic spectrum allocation, a user prioritization for the dynamic spectrum allocation, or a load balancing recommendation for the dynamic spectrum allocation.

According to a fifth aspect, there is provided a non-transitory computer readable medium comprising program instructions which, when executed by an apparatus, cause the apparatus to perform at least the following: receiving a data stream divided into segments with variable data patterns, wherein the data stream comprises at least one of: network traffic metrics of a radio access network, spectrum occupancy statistics of the radio access network, interference levels observed in the radio access network, or signal strength measurements associated with the radio access network; detecting a change point in the data stream, the change point corresponding to a shift in the data patterns; generating, based on the detection, by utilizing a generative artificial intelligence model, model parameters and normalization statistics for a machine learning model based on one or more previously learned segments of the data stream, the machine learning model being configured at least to learn from the data stream; updating the machine learning model based on the model parameters and the normalization statistics generated with the generative artificial intelligence model; and performing one or more predictions with the updated machine learning model, wherein the one or more predictions comprise at least one of: one or more predicted network traffic metrics of the radio access network, one or more predicted occupancy statistics of the radio access network, one or more predicted interference levels expected in the radio access network, one or more predicted signal strength measurements associated with the radio access network, one or more frequency bands for dynamic spectrum allocation, a user prioritization for the dynamic spectrum allocation, or a load balancing recommendation for the dynamic spectrum allocation.

According to a sixth aspect, there is provided an apparatus comprising: means for receiving a data stream divided into segments with variable data patterns, wherein the data stream comprises at least one of: network traffic metrics of a radio access network, spectrum occupancy statistics of the radio access network, interference levels observed in the radio access network, or signal strength measurements associated with the radio access network; means for detecting a change point in the data stream, the change point corresponding to a shift in the data patterns; means for generating, based on the detection, by utilizing a generative artificial intelligence model, model parameters and normalization statistics for a machine learning model based on one or more previously learned segments of the data stream, the machine learning model being configured at least to learn from the data stream; means for updating the machine learning model based on the model parameters and the normalization statistics generated with the generative artificial intelligence model; and means for performing one or more predictions with the updated machine learning model, wherein the one or more predictions comprise at least one of: one or more predicted network traffic metrics of the radio access network, one or more predicted occupancy statistics of the radio access network, one or more predicted interference levels expected in the radio access network, one or more predicted signal strength measurements associated with the radio access network, one or more frequency bands for dynamic spectrum allocation, a user prioritization for the dynamic spectrum allocation, or a load balancing recommendation for the dynamic spectrum allocation.

According to a seventh aspect, there is provided the apparatus of the sixth aspect, wherein the means for updating the machine learning model are configured to integrate the model parameters and the normalization statistics generated by the generative artificial intelligence model with previous model parameters and normalization statistics of the machine learning model.

According to an eighth aspect, there is provided the apparatus of the sixth or seventh aspect, wherein the generative artificial intelligence model is configured to generate the model parameters and the normalization statistics based on an input window representative of a segment of the data stream following the change point, by recalling previously learned model parameters and normalization statistics for the one or more previously learned segments with a similar data pattern as a data pattern of the segment following the change point.

According to a ninth aspect, there is provided the apparatus of any of the sixth to eighth aspects, wherein the generative artificial intelligence model is configured to cluster the model parameters and the normalization statistics within a latent space of the generative artificial intelligence model.

According to a tenth aspect, there is provided the apparatus of any of the sixth to ninth aspects, wherein the generative artificial intelligence model comprises a conditional variational autoencoder, or a generative adversarial network.

According to an eleventh aspect, there is provided the apparatus of any of the sixth to tenth aspects, wherein the machine learning model is configured to predict one or more future time points in the data stream based on previously learned segments of the data stream.

According to a twelfth aspect, there is provided the apparatus of any of the sixth to eleventh aspects, wherein the apparatus further comprises means for performing one or more predictions with the updated machine learning model, wherein the one or more predictions are associated with dynamic spectrum allocation for a radio access network, wherein the data stream comprises at least information on spectrum characteristics associated with the radio access network.

According to a thirteenth aspect, there is provided the apparatus of any of the sixth to twelfth aspects, wherein the apparatus further comprises means for training the generative artificial intelligence model based on the model parameters and normalization statistics generated with the generative artificial intelligence model.

According to a fourteenth aspect, there is provided the apparatus of any of the sixth to thirteenth aspects, wherein the data stream comprises multivariate time series data.

According to a fifteenth aspect, there is provided the apparatus of any of the sixth to fourteenth aspects, wherein the means for receiving the data stream are configured to receive the data stream from at least one of: one or more user equipments, one or more base stations, one or more cloud services, one or more network services, or one or more sensors.

According to a sixteenth aspect, there is provided the apparatus of any of the sixth to fifteenth aspects, wherein the apparatus further comprises means for detecting the change point by using maximum margin regression and approximate entropy.

According to a seventeenth aspect, there is provided the apparatus of any of the sixth to sixteenth aspects, wherein the model parameters comprise at least one of: weights or gradients.

According to an eighteenth aspect, there is provided the apparatus of any of the sixth to seventeenth aspects, wherein the normalization statistics comprise at least one of: mean and standard deviation, minimum and maximum scaling, logarithmic scaling, or n-root scaling.

According to a nineteenth aspect, there is provided the apparatus of any of the sixth to eighteenth aspects, wherein the apparatus comprises, or is comprised in, a base station of a radio access network, or a network function of a core network, or a network function executed in edge, or a network function executed in far edge, or a network function executed in extreme edge, or an edge computing device, or a cloud server.

### BRIEF DESCRIPTION OF THE DRAWINGS

In the following, various example embodiments will be described in greater detail with reference to the accompanying drawings, in which
FIG. 1 illustrates an example of a wireless communication network;
FIG. 2 illustrates an example embodiment of temporal sequential data learning using continual generative techniques;
FIG. 3 illustrates an example of irregularity factor quantification;
FIG. 4 illustrates an example of a system;
FIG. 5 illustrates a flow chart;
FIG. 6 illustrates a flow chart;
FIG. 7 illustrates an example of an apparatus;
FIG. 8 illustrates an example of an artificial neural network; and
FIG. 9 illustrates an example of a node of the artificial neural network.

### DETAILED DESCRIPTION

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments within the scope of the claims. Furthermore, the words "comprising" and "including" should be understood as not limiting the described embodiments to consist of only those features that have been mentioned, and such embodiments may also contain features that have not been specifically mentioned. Reference numbers, in the description and/or in the claims, serve to illustrate the embodiments with reference to the drawings, without limiting the embodiments to these examples only.

Some example embodiments described herein may be implemented in a wireless communication network comprising a radio access network based on one or more of the following radio access technologies (RATs): global system for mobile communications (GSM) or any other second generation (2G) radio access technology, universal mobile telecommunication system (UMTS, 3G) based on basic wideband-code division multiple access (W-CDMA), high-speed packet access (HSPA), long term evolution (LTE), LTE-Advanced, fourth generation (4G), fifth generation (5G), 5G new radio (NR), 5G-Advanced (i.e., 3GPP NR Rel-18 and beyond), or sixth generation (6G). Some examples of radio access networks include the universal mobile telecommunications system (UMTS) radio access network (UTRAN), the evolved universal terrestrial radio access network (E-UTRA), or the next generation radio access network (NG-RAN). The wireless communication network may further comprise a core network, and some example embodiments may also be applied to network functions of the core network.

It should be noted that the embodiments are not restricted to the wireless communication network given as an example, but a person skilled in the art may also apply the solution to other wireless communication networks or systems provided with necessary properties. For example, some example embodiments may also be applied to a communication system based on IEEE 802.11 specifications, or a communication system based on IEEE 802.15 specifications. IEEE is an abbreviation for the Institute of Electrical and Electronics Engineers.

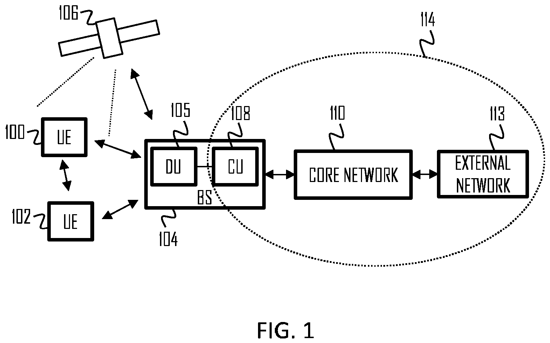

FIG. 1 depicts an example of a simplified wireless communication network showing some physical and logical entities. The connections shown in FIG. 1 may be physical connections or logical connections. It is apparent to a person skilled in the art that the wireless communication network may also comprise other physical and logical entities than those shown in FIG. 1.

The example embodiments described herein are not, however, restricted to the wireless communication network given as an example but a person skilled in the art may apply the example embodiments described herein to other wireless communication networks provided with necessary properties.

The example wireless communication network shown in FIG. 1 includes a radio access network (RAN) and a core network 110.

FIG. 1 shows user equipment (UE) 100, 102 configured to be in a wireless connection on one or more communication channels in a radio cell with a base station 104 of a radio access network.

The base station 104 may comprise a computing device configured to control the radio resources of the base station 104 and to be in a wireless connection with one or more UEs 100, 102. The base station 104 may also be referred to as a base transceiver station (BTS), an access node, an access point, a cell site, a network node, a radio access network node, or a RAN node. In this description, the terms "access node" and "base station" may be used interchangeably.

The base station 104 may be, for example, an evolved NodeB (abbreviated as eNB or eNodeB), or a next generation evolved NodeB (abbreviated as ng-eNB), or a next generation NodeB (abbreviated as gNB or gNodeB), providing the radio cell. The base station 104 may include or be coupled to transceivers. From the transceivers of the base station 104, a connection may be provided to an antenna unit that establishes a bidirectional radio link to one or more UEs 100, 102. The antenna unit may comprise an antenna or antenna element, or a plurality of antennas or antenna elements.

The wireless connection (e.g., radio link) from a UE 100, 102 to the base station 104 may be called uplink (UL) or reverse link, and the wireless connection (e.g., radio link) from the base station 104 to the UE 100, 102 may be called downlink (DL) or forward link. A UE 100 may also communicate directly with another UE 102, and vice versa, via a wireless connection generally referred to as a sidelink (SL). It should be appreciated that the base station 104 or its functionalities may be implemented by using any node, host, server, access point or other entity suitable for providing such functionalities.

The radio access network may comprise more than one base station 104, in which case the base stations may also be configured to communicate with one another over wired or wireless links. These links between base stations may be used for sending and receiving control plane signaling and also for routing data from one base station to another base station.

The base station 104 may further be connected to a core network (CN) 110. The core network 110 may comprise an evolved packet core (EPC) network and/or a 5^{th} generation core network (5GC). The EPC may comprise network entities, such as a serving gateway (S-GW for routing and forwarding data packets), a packet data network gateway (P-GW) for providing connectivity of UEs to external packet data networks, and/or a mobility management entity (MME). The 5GC may comprise one or more network functions, such as at least one of: a user plane function (UPF), an access and mobility management function (AMF), a location management function (LMF), and/or a session management function (SMF).

The core network 110 may also be able to communicate with one or more external networks 113, such as a public switched telephone network or the Internet, or utilize services provided by them. For example, in 5G wireless communication networks, the UPF of the core network 110 may be configured to communicate with an external data network via an N6 interface. In LTE wireless communication networks, the P-GW of the core network 110 may be configured to communicate with an external data network.

It should also be understood that the distribution of functions between core network operations and base station operations may differ in future wireless communication networks compared to that of the LTE or 5G, or even be non-existent.

The illustrated UE 100, 102 is one type of an apparatus to which resources on the air interface may be allocated and assigned. The UE 100, 102 may also be called a wireless communication device, a subscriber unit, a mobile station, a remote terminal, an access terminal, a user terminal, a terminal device, or a user device, just to mention but a few names. The UE 100, 102 may be a computing device operating with or without a subscriber identification module (SIM), including, but not limited to, the following types of computing devices: a mobile phone, a smartphone, a personal digital assistant (PDA), a handset, a computing device comprising a wireless modem (e.g., an alarm or measurement device, etc.), a laptop computer, a desktop computer, a tablet, a game console, a notebook, a multimedia device, a reduced capability (RedCap) device, a wearable device (e.g., a watch, earphones or eyeglasses) with radio parts, a sensor comprising a wireless modem, or a computing device comprising a wireless modem integrated in a vehicle.

It should be appreciated that the UE 100, 102 may also be a nearly exclusive uplink-only device, of which an example may be a camera or video camera loading images or video clips to a network. The UE 100, 102 may also be a device having capability to operate in an Internet of Things (IoT) network, which is a scenario in which objects may be provided with the ability to transfer data over a network without requiring human-to-human or human-to-computer interaction.

The wireless communication network may also be able to support the usage of cloud services. For example, at least part of core network operations may be carried out as a cloud service (this is depicted in FIG. 1 by "cloud" 114). The UE 100, 102 may also utilize the cloud 114. In some applications, the computation for a given UE may be carried out in the cloud 114 or in another UE.

The wireless communication network may also comprise a central control entity, such as a network management system (NMS), or the like. The NMS is a centralized suite of software and hardware used to monitor, control, and administer the network infrastructure. The NMS is responsible for a wide range of tasks such as fault management, configuration management, security management, performance management, and accounting management. The NMS enables network operators to efficiently manage and optimize network resources, ensuring that the network delivers high performance, reliability, and security.

5G enables using multiple-input and multiple-output (MIMO) antennas in the base station 104 and/or the UE 100, 102, many more base stations or access nodes than an LTE network (a so-called small cell concept), including macro sites operating in cooperation with smaller stations and employing a variety of radio technologies depending on service needs, use cases and/or spectrum available. 5G wireless communication networks may support a wide range of use cases and related applications including video streaming, augmented reality, different ways of data sharing and various forms of machine-type applications, such as (massive) machine-type communications (mMTC), including vehicular safety, different sensors and real-time control.

In 5G wireless communication networks, base stations and/or UEs may have multiple radio interfaces, such as below 6 gigahertz (GHz), centimeter wave (cmWave) and millimeter wave (mmWave), and also being integrable with legacy radio access technologies, such as LTE. Integration with LTE may be implemented, for example, as a system, where macro coverage may be provided by LTE, and 5G radio interface access may come from small cells by aggregation to LTE. In other words, a 5G wireless communication network may support both inter-RAT operability (such as interoperability between LTE and 5G) and inter-RI operability (inter-radio interface operability, such as between below 6GHz, cmWave, and mmWave).

5G wireless communication networks may also apply network slicing, in which multiple independent and dedicated virtual sub-networks (network instances) may be created within the same physical infrastructure to run services that have different requirements on latency, reliability, throughput and mobility.

5G may enable analytics and knowledge generation to occur at the source of the data. This approach may involve leveraging resources that may not be continuously connected to a network, such as laptops, smartphones, tablets and sensors. Multi-access edge computing (MEC) may provide a distributed computing environment for application and service hosting. It may also have the ability to store and process content in close proximity to cellular subscribers for faster response time. Edge computing may cover a wide range of technologies, such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

In one embodiment, a base station 104 may comprise: a radio unit (RU) comprising a radio transceiver (TRX), i.e., a transmitter (Tx) and a receiver (Rx); one or more distributed units (DUs) 105 that may be used for the so-called Layer 1 (L1) processing and real-time Layer 2 (L2) processing; and a central unit (CU) 108 (also known as a centralized unit) that may be used for non-real-time L2 and Layer 3 (L3) processing. The CU 108 may be connected to the one or more DUs 105 for example via an F1 interface. Such an embodiment of the base station 104 may enable the centralization of CUs relative to the cell sites and DUs, whereas DUs may be more distributed and may even remain at cell sites. The CU and DU together may also be referred to as baseband or a baseband unit (BBU). The CU and DU may also be comprised in a radio access point (RAP).

The CU 108 may be a logical node hosting radio resource control (RRC), service data adaptation protocol (SDAP) and/or packet data convergence protocol (PDCP), of the NR protocol stack for a base station 104. The CU 108 may comprise a control plane (CU-CP), which may be a logical node hosting the RRC and the control plane part of the PDCP protocol of the NR protocol stack for the base station 104. The CU 108 may further comprise a user plane (CU-UP), which may be a logical node hosting the user plane part of the PDCP protocol and the SDAP protocol of the CU for the base station 104.

The DU 105 may be a logical node hosting radio link control (RLC), medium access control (MAC) and/or physical (PHY) layers of the NR protocol stack for the base station 104. The operations of the DU 105 may be at least partly controlled by the CU 108. It should also be understood that the distribution of functions between the DU 105 and the CU 108 may vary depending on the implementation.

Cloud computing systems may also be used to provide the CU 108 and/or DU 105. A CU provided by a cloud computing system may be referred to as a virtualized CU (vCU). In addition to the vCU, there may also be a virtualized DU (vDU) provided by a cloud computing system. Furthermore, there may also be a combination, where the DU may be implemented on so-called bare metal solutions, for example application-specific integrated circuit (ASIC) or customer-specific standard product (CSSP) system-on-a-chip (SoC).

Edge cloud may be brought into the radio access network by utilizing network function virtualization (NFV) and software defined networking (SDN). Using edge cloud may mean base station operations to be carried out, at least partly, in a computing system operationally coupled to a remote radio head (RRH) or a radio unit (RU) of a base station 104. It is also possible that base station operations may be performed on a distributed computing system or a cloud computing system located at the base station 104. Application of cloud RAN architecture enables RAN real-time functions being carried out at the radio access network (e.g., in a DU 105), and non-real-time functions being carried out in a centralized manner (e.g., in a CU 108).

5G (or new radio, NR) wireless communication networks may support multiple hierarchies, where multi-access edge computing (MEC) servers may be placed between the core network 110 and the base station 104. It should be appreciated that MEC may be applied in LTE wireless communication networks as well.

A 5G wireless communication network ("5G network") may also comprise a non-terrestrial communication network, such as a satellite communication network, to enhance or complement the coverage of the 5G radio access network. For example, satellite communication may support the transfer of data between the 5G radio access network and the core network 110, enabling more extensive network coverage. Possible use cases may include: providing service continuity for machine-to-machine (M2M) or Internet of Things (IoT) devices or for passengers on board of vehicles, or ensuring service availability for critical communications, and future railway, maritime, or aeronautical communications. Satellite communication may utilize geostationary earth orbit (GEO) satellite systems, but also low earth orbit (LEO) satellite systems, in particular mega-constellations (i.e., systems in which hundreds of (nano)satellites are deployed). A given satellite 106 in the mega-constellation may cover several satellite-enabled network entities that create on-ground cells. The on-ground cells may be created through an on-ground relay access node or by an access node located on-ground or in a satellite.

It is obvious for a person skilled in the art that the base station 104 depicted in FIG. 1 is just an example of a part of a radio access network, and in practice the radio access network may comprise a plurality of base stations 104, the UEs 100, 102 may have access to a plurality of radio cells, and the radio access network may also comprise other apparatuses, such as physical layer relay access nodes or other entities. At least one of the base stations may be a Home eNodeB or a Home gNodeB. A Home gNodeB or a Home eNodeB is a type of base station that may be used to provide indoor coverage inside a home, office, or other indoor environment.

Additionally, in a geographical area of a radio access network, a plurality of different kinds of radio cells as well as a plurality of radio cells may be provided. Radio cells may be macro cells (or umbrella cells) which may be large cells having a diameter of up to tens of kilometers, or smaller cells such as micro-, femto- or picocells. The base station(s) 104 of FIG. 1 may provide any kind of these cells. A cellular radio network may be implemented as a multilayer access networks including several kinds of radio cells. In multilayer access networks, one base station may provide one kind of a radio cell or radio cells, and thus a plurality of base stations may be needed to provide such a multilayer access network.

For fulfilling the need for improving performance of radio access networks, the concept of "plug-and-play" access nodes may be introduced. A radio access network, which may be able to use "plug-and-play" access nodes, may include, in addition to Home eNodeBs or Home gNodeBs, a Home Node B gateway (HNB-GW) (not shown in FIG. 1). An HNB-GW, which may be installed within an operator's radio access network, may aggregate traffic from a large number of Home eNodeBs or Home gNodeBs back to a core network 110 of the operator.

6G wireless communication networks are expected to adopt flexible decentralized and/or distributed computing systems and architecture and ubiquitous computing, with local spectrum licensing, spectrum sharing, infrastructure sharing, and intelligent automated management underpinned by mobile edge computing, artificial intelligence, short-packet communication and blockchain technologies. Key features of 6G may include intelligent connected management and control functions, programmability, integrated sensing and communication, reduction of energy footprint, trustworthy infrastructure, scalability and affordability. In addition to these, 6G is also targeting new use cases covering the integration of localization and sensing capabilities into system definition to unifying user experience across physical and digital worlds.

Data streaming refers to the continuous transmission and processing of data (e.g., over a network) in real-time or near-real-time. It involves the streaming of data packets, messages, or events between different network components or systems.

Publish/subscribe (pub/sub) is a messaging pattern where publishers send messages, e.g., to a central or distributed broker, which distributes them to interested subscribers, allowing for scalable and decoupled communication between data producers and data consumers. The pub/sub paradigm for data streaming may offer advantages such as scalability, real-time delivery, decoupling of publishers and subscribers, and the ability to handle large volumes of data from multiple sources, enabling efficient and flexible data distribution and consumption.

For example, the data stream may comprise time series data. Time series data refers to a sequence of data with temporal ordering, which is ubiquitous in various domains and industries. The analysis of temporal sequences may provide valuable insights into the behavior and dynamics of complex systems.

Time series forecasting is the process of predicting future values based on historical data patterns. In the telecommunications industry, enhanced reliability for services is desirable due to the rapid surge in the number of data-generating devices. This may necessitate collecting metrics with finer granularity (e.g., every second instead of every minute). Hence, time series analysis plays a key role for example for network performance monitoring, fault detection and troubleshooting, capacity planning, service level agreement (SLA) management, dynamic slicing and predictive maintenance, etc. One aspect in time series analysis is detecting points, where there is a significant change in the behavior, trend, or characteristics of the data, known as change point detection.

A "data pattern" may refer to a recognizable, repeatable sequence or arrangement of data elements that may be identified through data analysis. In the context of data science, machine learning, and statistics, data patterns may reveal trends, correlations, clusters, or other relationships within the dataset. Data pattern recognition may be facilitated by a variety of analytical and machine learning techniques, ranging from simple statistical analysis to complex deep learning models. Identifying these data patterns may be beneficial for understanding the underlying structure of the data, predicting future trends, making decisions, and deriving insights. Data patterns may manifest in various forms, depending on the nature of the data and the specific domain of application. Some examples of data pattern types may include trends, seasonality, clusters, associations, and anomalies.

Trends are sequential patterns that indicate a general direction in which something is developing or changing over time.

Seasonality refers to patterns that repeat over a fixed period, such as daily, monthly, or yearly cycles.

Clusters refer to groupings of data points that share similar characteristics. For example, clusters may be identified in unsupervised learning to find natural divisions within the data.

Associations refer to relationships where certain data elements appear together frequently.

Anomalies refer to deviations from the norm or expected patterns, which can indicate errors, fraud, or significant but rare events. However, it should be noted that anomalies may also be random deviations without any significance.

Offline change point detection involves analyzing historical data to identify points, where a significant shift in the underlying data pattern occurs. In contrast to offline change point detection, which involves analyzing historical data, online change point detection operates on live-streaming (real-time) time series data, for example for continuous monitoring or immediate anomaly detection. Online change point detection processes individual data points as they are received, aiming to promptly identify shifts in the underlying state as they happen. Online change point detection emphasizes swift processing to rapidly identify fluctuations in the time series pattern and focuses on the most recent alteration in the time series, excluding prior shifts.

In today's rapidly evolving digital landscape, staying competitive may require agile learning and rapid adaptation to streaming data. Analyzing and extracting valuable insights from the increasing volume, velocity, and variety of data helps to make informed real-time decisions. Swift adaptation and learning from this dynamic data stream enables entities within the network to identify emerging trends, respond promptly to changing data patterns, and optimize operations and services effectively. Agility in learning from and adapting to data streams is beneficial to address the growing needs of modern applications and data-intensive tasks, while mitigating complexity and preventing the formation of extensive data silos.

Diverse data patterns may be encountered in a continuous data stream. These patterns may arise due to various factors, such as changes in the underlying processes, sudden events, or shifts in the behavior of different entities. For example, there may be changes in data patterns from a cell during weekdays compared to weekends, or data from UEs in different environments, or even while processing data from different cells. As a result, the statistical characteristics and properties of the incoming data may vary significantly, and therefore the learning model should be adapted in (near) real time to provide reliable analysis and predictions. Using outdated models in dynamic data streams may lead to inaccurate predictions and delayed responses, reducing their relevance and increasing operational risks. Such outdated models may fail to adapt to emerging patterns and events, compromising the quality of decision-making and potentially resulting in suboptimal outcomes.

Data normalization and scaling may be applied in machine learning (ML) techniques, as it affects convergence speed and model performance. Data normalization may be realized using the statistics extracted from the whole training data. In online scenarios, the statistics may be updated based on each new (mini) batch of the data that is observed. Different data patterns in a data stream may necessitate distinct normalization statistics and properties. For instance, one segment of the data stream may exhibit a sudden surge in values, requiring a normalization technique that can effectively handle outliers. Another segment might have a more stable distribution, allowing for a different normalization approach tailored to that specific pattern. Hence, adapting to these varying patterns helps to accurately analyze and process the data in (near) real time. Adjusting the normalization techniques based on the specific characteristics of the data patterns ensures that the data is appropriately prepared for meaningful analysis and insights. Incorrect normalization distorts the distribution of features, leading to biased interpretations and misleading predictions. It may amplify noise, hinder convergence during training, and compromise the model's accuracy and generalization on unseen data, ultimately affecting decision-making and real-world applications. When observing a new segment of the data, dissimilar to the previous one, using the previously computed normalization statistics may not be valid anymore. On the other hand, if dynamic statistic updates are used when the current data pattern (distribution) is dissimilar with the previous data pattern, updating the model based on the few observed examples of the current data pattern may either cause instability, or it may take several iterations to capture the statistics of the new segment. This may cause model deterioration in the time points where the data has not been normalized using accurate statistics (due to facing a new data distribution).

Currently, the data that is produced (e.g., by sensors or processes) may be collected and stored for further processing. In a separated pipeline, the collected data may be used by artificial intelligence or machine learning approaches. This separate data collection and later curation (e.g., data cleaning, normalization, calibration, etc.) and processing (e.g., correlation analysis, model learning, etc.) requires the network to endure substantial bandwidth usage for data transfer. Also, it is complex to manage the process of storage and later fetching and redistributing (e.g., to processing units) large volumes of data. Furthermore, the storage, retrieval, and redistribution of such substantial amounts of raw data may pose a risk of data leakage and privacy breaches. This situation may become exacerbated in the 6G era, where the highly interconnected ecosystem of devices and applications is expected to generate massive amounts of data.

In data processing, point-wise anomaly detection may not be suitable for situations, where a segment of the data exhibits a distinct data pattern that necessitates detection and subsequent appropriate action, such as in IoT data where failure can be detected from sensor data when a data segment shows a highly fluctuating pattern. Hence, data segmentation in an online fashion may be needed, as it paves the way for downstream tasks such as segments characterizations and tailored pro-active decision making at different intervals.

It should be noted that data diversity in the data stream may come from different data sources (e.g., cells across different frequency carriers), or it can come from the same source with varying conditions (e.g., a UE in different environments).

Among the various data streaming sources with varying patterns, some examples may include but are not limited to: UEs 100, 102, base stations 104, and cloud and network services.

UEs 100, 102 may serve as sensing elements. Through UEs 100, 102, network operators can gather information about signal strength, signal quality, and location, for example. This data can help in optimizing coverage, identifying coverage gaps, and improving the overall user experience.

Base stations 104 of radio access networks may act as sensors by continuously monitoring key network parameters, such as signal strength, interference levels, and quality of service (QoS) indicators. This information can be used to optimize network performance, detect anomalies, and adapt network configurations dynamically.

Cloud and network services may refer to servers or cloud-based services within the network that continuously produce data streams related to usage, processing load, response times, and resource utilization. The data patterns may change with varying user demand and application processing.

Communication in the above use cases may benefit from integrating agile online model learning into the procedure. Considering the immense volume of data generated each second, this data needs to be transformed into abstract knowledge, such as learning models out of the data, instead of directly storing the raw data which raises concerns about data storage and privacy. The goal is to learn the data streams, being capable of forecasting the data or other prediction tasks accordingly, and swiftly adjust and respond to alterations in the sequential data stream. This model can be assumed as a backbone model for on-the-fly data processing and learning from diverse patterns, also known as a base model or pre-trained model, which can be fine-tuned (specialized) on different data patterns through a technique described in the following. In other words, this backbone model learns from data streams, adapts swiftly, and provides reliable forecasts. Some example embodiments are based on constructing such a backbone model capable of rapid learning from diverse patterns within a data stream.

Some example embodiments provide a predictive data sensing system comprising the backbone model that learns from diverse streaming data in an online fashion, and a generative artificial intelligence model that reminds the backbone model about the model parameters and normalization statistics (knowledge) related to the similar segments observed before. Thus, there is no need for storing the actual data.

The input data to the backbone model may come from diverse distributions, and a drift (change point) in the data stream may occur. The generative artificial intelligence model may be used to adapt the backbone model quickly to the newly observed data pattern. More specifically, the backbone model makes the prediction for the main task, and the generative artificial intelligence model generates the model parameters (e.g., weights) for the backbone model, which are optimized for the currently observed data pattern.

Some example embodiments may enable real-time or at least near-real-time data sensing through learning, remembering and extracting new knowledge, while retaining the previously extracted knowledge from data sources of dynamic nature. The backbone model may be adapted to each new observed data distribution swiftly, providing fast and accurate data analysis and learning. Thus, some example embodiments may provide improved efficiency for data sensing and sharing in terms of energy consumption, time, privacy, and data storage.

Herein multivariate time series data may be used as an example of the data format, and the above-mentioned RAN elements (UEs and base stations) and cloud and network services may be used as examples of potential use cases. However, some example embodiments are highly versatile and not limited to these examples. The applicability of some example embodiments extend beyond these use cases, encompassing the learning and prediction of different type of data streams with a dynamic nature. Some example embodiments may enhance online model learning performance, accelerate adaptability, and reduce the occurrence of catastrophic forgetting in any online continual learning setup.

Some example embodiments may utilize an agile online continual learning setup, which suits scenarios where it is desirable to learn from a data stream while monitoring (observing) the data. This setup does not require storing data and then processing it separately.

Batch learning involves having access to a data set, which is used to train (fit) a machine learning model. This machine learning model may then be deployed, and it may be assumed that the data that the model will see in the future are taken from the same underlying distribution as the training data, and therefore the model can perform a descent prediction. However, unlike batch learning where a model is trained on a fixed dataset and then deployed, online continual learning enables the model to learn from new data (tasks) on the fly, while retaining knowledge from previous tasks or experiences. Online continual learning addresses the challenge of acquiring and retaining knowledge (stability-plasticity dilemma) in dynamic and evolving environments, while having limited access to past data. Continual learning algorithms are designed to incrementally update the model parameters, adapt to new information, and avoid catastrophic forgetting of previously learned knowledge. This allows the model to stay updated, handle concept drift (changes of the patterns in different data segments), and efficiently incorporate new data without requiring retraining the model from scratch.

Some example embodiments may provide a predictive data sensing system that is capable of the following.

The predictive data sensing system may be configured to detect the points where the sensing or learning backbone model (i.e., the virtual representation of a real system) needs reconfiguration, adaptation and synchronization to the current distribution of the data through online change point detection (drift detection) and sequence segmentation. Although these change points are used for algorithm reconfiguration, this information may also be communicated to interested parties.

The predictive data sensing system may be configured to perform continual learning by learning new knowledge and/or patterns, without storing the previous training data explicitly (in a memory) or forgetting the previously observed or learned knowledge and/or patterns, by using a generative artificial intelligence model.

The predictive data sensing system may be configured to adapt algorithm parameters (e.g., weights and/or gradients) of the backbone model to the new data segment, to provide tailored and fast adaptation through adaptation to the distributions that the generative artificial intelligence model has captured and learned previously.

The predictive data sensing system may be configured to perform online and adaptive data preprocessing (e.g., scaling, normalization), considering related data segments and discarding non-related data segments, which may be advantageous for almost any learning algorithm. Including related data segments and excluding non-related data segments for statistics computation may improve generalization of the normalization statistics (e.g., mean and standard deviation) and data preprocessing, which may improve the model accuracy and convergence speed. This procedure may be realized by mapping a particular input (representative of that data segment) to a specific distribution through the generative artificial intelligence model, to learn the mapping from the input window data to its corresponding statistics.

The above-mentioned capabilities may facilitate effective agile online continual learning and forecasting the potential next incoming data, which may lead to reliable proactive decision making.

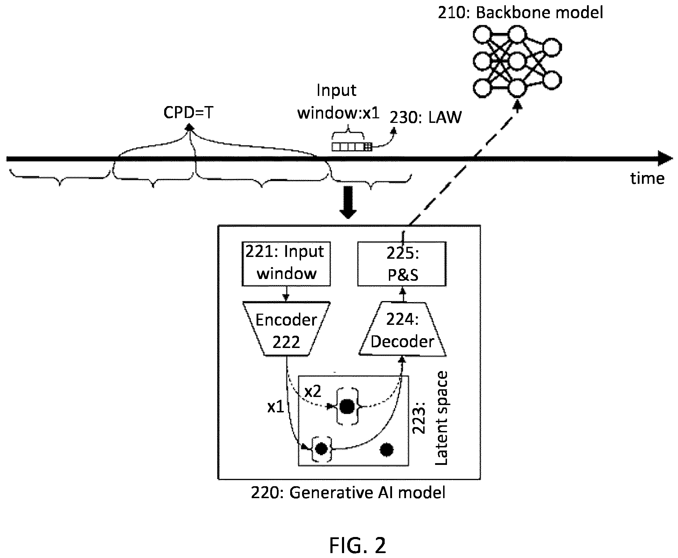

FIG. 2 illustrates an example embodiment of temporal sequential data learning using continual generative techniques.

Referring to FIG. 2, data arrives in streaming form, and a machine learning model 210 referred to as a backbone model (BBM) learns in an online fashion from the arriving data stream. The backbone model 210 may comprise both adaptive and continual components, in which the adaptive part may be adapted to each new data segment, whereas the continual part may be updated in an online fashion. The backbone model 210 is configured to learn from the data stream and provide a look-ahead window prediction (LAW in FIG. 2). For example, the backbone model 210 may comprise a deep artificial neural network capable of processing time series data (e.g., to capture sequential patterns in the time series). Some examples of such a deep artificial neural network may include but are not limited to: a temporal convolutional network (TCN), a long short-term memory (LSTM) network, or a recurrent neural network (RNN).

In the context of data stream processing, incoming data is continuously received and processed. The input window is considered to be of size L, denoting the number of data points or time steps included in the input window. The objective is to forecast future time points, referred to as the look-ahead window (LAW) 230, which represents the time horizon for prediction. As an example, the size of the look-ahead window 230 may be one, meaning that the goal is to predict a single future time point. However, it is also possible for the look-ahead window 230 to have a size greater than one, denoted by *len*(*LAW*) ≥ 1, indicating the prediction of multiple future time points.

The training of the backbone model 210 may involve one or more temporal analysis techniques. In the training process of the backbone model 210, a given example comprises an input window representing input data and the LAW 230 representing the output. As new data arrives, the input is shifted one step forward in time, consequently shifting the output window accordingly. For instance, it may be assumed that data is received at time *t* - 5, *t* - 4, *t* - 3, *t* - *2, t -* 1 and *t,* and the *len*(*LAW*) *=* 1. For the input window of size 4, pairs of training examples include data received at the following times (*input* = *t* - 5, *t* - 4, *t -* 3, *t* - 2; *output* = *t* - 1), (*input* = *t* - 4, *t* - 3, *t - 2, t -* 1; *output* = *t*), etc.

The data stream is segmented through an online change point detection (CPD) approach. After observing a change point (CPD=T), the input window 221 representative of that data segment is provided to the generative artificial intelligence model (GENM) 220, and the GENM 220 generates (the adaptive part of) the model parameters and the related normalization statistics 225 for the BBM 210 for the current data segment. The generated model parameters and normalization statistics 225 may be integrated with the previous model parameters and normalization statistics of the BBM 210 (e.g., via weighted averaging or simple averaging). The model parameters of the BBM 210 may be updated in an online fashion as more data from that data segment arrives. At the end of the data segment, the GENM 220 may be trained using the newly generated model parameters and normalization statistics of the BBM 210 for that data segment. This process may continue for the future data segments.

In other words, the GENM 220 serves an assistant or auxiliary model for the BBM 210, to remind the BBM 210 about the model parameters and normalization statistics (knowledge extracted before) for a similar data segment to the one it is currently observing. The GENM 220 may be configured to cluster the model parameters and normalization statistics 225 within its latent space 223. In FIG. 2, x1 and x2 are two input windows from distinct data patterns, which have been clustered in different clusters in the latent space 223 of the GENM 220. When provided with data corresponding to a specific data pattern, the GENM 220 generates a sample from model parameters and normalization statistics corresponding to that cluster.

As an example, the GENM 220 may comprise a conditional variational autoencoder (CVAE). Variational autoencoders (VAEs) are generative models that use a probabilistic approach to represent data in the latent space. VAEs encode inputs into probability distributions, enabling the generation of new data points with uncertainty. CVAEs extend the concept of VAEs by incorporating additional conditional information during training and generation. The encoder 222 considers both the input and conditional data to generate meaningful latent codes, while the decoder 224 utilizes both the latent code and specified conditions to produce structured and controlled data.

For model adaptation, the GENM 220 learns the mapping from an input window 221 of the (original) data to the model parameters (e.g., weights or gradients) of the BBM 210. To this end, the CVAE may be trained to generate the model parameters of the BBM 210 as a function of the input window 221 of the original data. Hence, whenever a change point is detected, the GENM 220 may be queried to predict the likely model parameters that should be used for the current data segment. It should be noted that the GENM 220, which may be used for recalling and fast adaptation, is supposed to generate the likely relevant model parameters conditioned on the observed input window 221.

Herein a technique called forward normalization (data adaptation, scaling) may be applied for normalizing the streaming data, considering related data segments and discarding non-related data segments. Including related data segments and excluding non-related data segments for statistics computation may improve generalization of the normalization statistics (e.g., mean and standard deviation) and data preprocessing. To this end, the GENM 220 learns the mapping from the input window 221 to the corresponding normalization statistics.

Forward normalization refers to the use of the past observations (normalization statistics) to make an estimation about the future (future-in-the-past data) expected normalization statistics in the same data segment. This may involve using the normalization statistics of the data that are in the same segment and have already been observed, and utilizing the anticipated normalization statistics of data that is expected to be seen in the future within the same segment. Non-related normalization statistics from other different segments may be discarded.

Hence, the CVAE may be used to generate the normalization statistics as well (in addition to the model parameters). This procedure may be performed by concatenating the model parameters with the normalization statistics. The CVAE may be used for generating jointly the model parameters and the normalization statistics, since they are both functions of the input data of a particular segment. In other words, by jointly modelling the normalization statistics with the model parameters of the BBM 210, the correlation of the per-segment-tailored normalization statistics with the per-segment model parameters may be taken into account. Furthermore, since the model parameters and normalization statistics are correlated, jointly modelling them helps the CVAE to perform more accurate clustering in its latent space 223.

When a change point is detected, the inference from the GENM 220 may be as follows. For an input window 221, the GENM 220 is queried to generate the model parameters and normalization statistics 225 for the BBM 210. The generated model parameters and normalization statistics 225 may be integrated with the previously computed model parameters and normalization statistics of the BBM 210.

For example, the integration may mean that a weighted average is determined for the previously computed model parameters and normalization statistics and the new model parameters and normalization statistics 225 generated by the GENM 220. To determine the coefficient (i.e., impact of the previous model parameters and normalization statistics, versus the ones generated by the GENM 220) of the weighted average, the uncertainty produced by the CVAE may be exploited. As the uncertainty of the CVAE (variance obtained from the latent space 223) is higher, the weight of the generated model parameters and normalization statistics 225 may be lower in the integration, since the GENM 220 is less confident about its data generation. However, as the GENM 220 is trained on more data, its uncertainty becomes lower for the segments that have been observed in the past. The integrated normalization statistics may be used to scale the input window of the data. The model parameters of the BBM 210 may be updated with the newly integrated model parameters.

Some techniques for the online change point detection are described in the following.

For example, one-class support vector machine (SVM) may be utilized for the change point detection. One-class SVM may be used to create a boundary that encompasses the majority of the data points, defining the "normal" region. Data points that fall outside this boundary are considered anomalies or outliers.

As another example, maximum margin regression (MMR) and approximate entropy (ApEn) may be used for the change point detection.

MMR is a reformulation of the SVM for vector outputs. The MMR is an approach for structural learning, since it can process any abstract Hilbertian outputs. By embedding the output structure in addition to input structure in a suitable Hilbert space, most original properties are preserved, allowing the discovery of relationships between structured input and structured output. More specifically, in this approach, a kernel (e.g. gaussian) may be built over the input space, and a kernel (the same or different type of kernel as used for the input space) may be built over output space. The idea is to find the linear operator that maps the input feature space (e.g., nonlinear mapping of the original input) to the output feature space (e.g., nonlinear mapping of the original output).

In other words, MMR is similar to one-class SVM with the difference that MMR considers the structure of both input and output data, while modelling the data. In this specific application, time series data may be handled by modelling the sequence of input windows and considering their nonlinear relationships using kernel tricks. This procedure can be used to identify potentially out-of-distribution points within an input window 221. In SVM, the dual variables (Lagrange multipliers) represent the importance or weight assigned to each training example (which is likely to be high for support vectors) in the decision boundary's construction. Similarly, some example embodiments may monitor dual variables (called importance coefficients herein) assigned by MMR in the recent data, compute approximate entropy over the obtained coefficients, and detect the irregularity points in the importance coefficient space as potential change points (data drift). In other words, the dual variables (called importance coefficients herein), also known as Lagrange multipliers, determine the influence of each support vector on the classification or regression task. Higher values of the dual variables suggest that the corresponding example has a more significant impact on the model's decision-making process, indicating its importance in shaping the MMR's behavior.

Approximate entropy (ApEn) is a statistical technique used to quantify the irregularity and unpredictability in a time series. ApEn assesses the similarity between a short subsequence and compares them to a longer subsequence in the data. By counting the occurrences of patterns that are within a defined tolerance level, ApEn measures the likelihood that nearby points will remain similar over longer stretches. A higher ApEn value indicates greater complexity and unpredictability, while a lower ApEn value suggests more regularity. By applying ApEn to a time series with appropriate parameters, it is possible to gain insights into its underlying dynamics, detecting patterns and potential anomalies in the data.

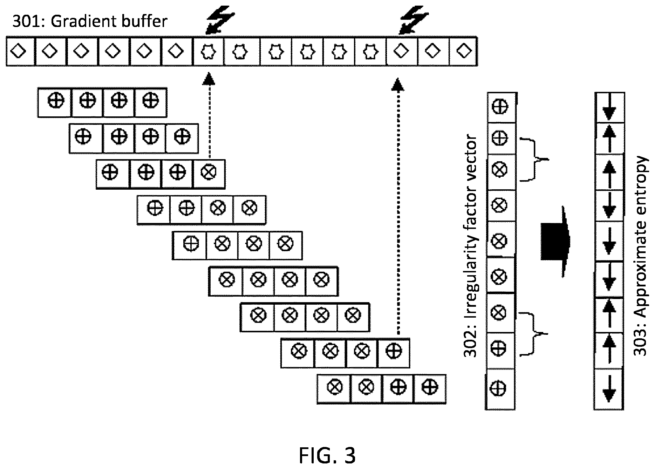

FIG. 3 illustrates an example of irregularity factor quantification, represented by a gradient buffer 301 and an irregularity factor vector 302.

In artificial neural network approaches, gradient vector plays a significant role in training the artificial neural network. During the training process, the network's parameters (weights) are adjusted iteratively to minimize the loss function, which measures the discrepancy between the predicted output and the true output. Gradient vector determines the direction and magnitude of the parameter updates that can reduce the loss. In online learning setups, the data is processed in a sequential manner, where each data point or mini batch is presented one at a time. This can result in noisy and sparse gradients, because the updates are based on a small subset (or even one single data point) of the data. Also, anomalies, which are ubiquitous in real-world data, may introduce high-frequency fluctuations in the gradient estimates, hence making them unstable. Additionally, in the temporal sequence data, there may be a strong temporal consistency across consecutive samples. Hence, to mitigate the instability of gradients and consider the temporal dependencies, one possible technique is to use a (exponential) moving average of the gradient estimates known as momentum. The (exponential) moving average smooths out the fluctuations in the gradients, providing a more stable estimate of the overall direction of the optimization.

For dealing with streaming data, it may be beneficial to have an online change point detection approach that detects the changes that occur in the data stream. However, the setup described herein may also be used in the offline setups, wherein it is easier to detect the changes when the whole data is available. The main requirements for the change point detection (drift detection) approaches to be applicable in the described scenario include: 1) the approach should be online (with least latency of the detection from its occurrence), and 2) the approach should work on multivariate and high-dimensional data, since in many cases the streaming network management data may be high-dimensional.

To this end, the MMR approach may be used to find the change points, and the approximate entropy approach may be used to quantify the level of irregularity. The data may be processed through (fixed size) windows, and when new data arrives, the window may be shifted one step ahead. The gradient buffer 301 collects the gradient vectors which correspond to the consequent data windows. Only the recent gradient vectors (for the recent input windows) may need to be saved. MMR may then be used, where the inputs and outputs are the gradient vectors of the recent input windows. The dual variables (importance factors) computed by the MMR may be monitored. In FIG. 3, for simplicity, it is assumed that MMR is running over a window of size 4, of gradient vectors (corresponding to four recent data windows). The dual variables are shown in the form of ⊕ and ⊗. As more data arrives, a new set of dual variables is obtained. The last value (to check the latest arrived data point) in the vector of dual variables is taken and used to form the irregularity factor vector 302. The main reason for taking only the last value is that the data window is assumed to shift one step ahead every time, meaning that the latest data arrived is the last data point in the data window. To check the irregularity of the latest point, the dual variable (importance factor) corresponding to the latest data window is checked. Approximate entropy 303 over the collected irregularity factor vector 302 may be used to quantify the irregularity factor. As shown in FIG. 3, where there is an irregularity, approximate entropy has a higher value (shown in FIG. 3 using ↑ to show higher ApEn, and ↓ to show lower ApEn).

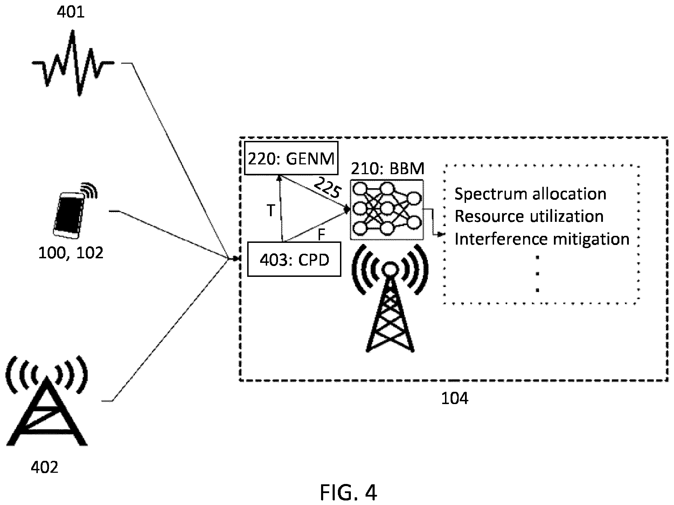

FIG. 4 illustrates an example of a system, to which some example embodiments may be applied.

As described above, some example embodiments may be used to facilitate agile learning of data streaming across diverse entities for various use cases. However, FIG. 4 illustrates an example of a RAN-specific use case, where the goal is to optimize dynamic spectrum allocation within a heterogeneous network environment.

Dynamic spectrum allocation (DSA) refers to a technology that enables the real-time or near-real-time allocation of spectrum resources to communication devices or networks based on current demand, usage patterns, and environmental conditions. Unlike static spectrum allocation, where frequency bands are permanently assigned to specific users or services, DSA dynamically adjusts spectrum allocation to optimize utilization, reduce interference, and accommodate varying network loads and conditions. This process involves continuously monitoring the spectrum to identify underutilized frequencies and reallocating them to users or applications in need, thereby enhancing the overall efficiency and capacity of wireless communication systems.

Efficient coexistence between different wireless technologies is beneficial to ensure efficient spectrum utilization, reduce interference, enhance network reliability, and pave the way for seamless integration of new radio access technologies, ultimately improving the overall wireless communication ecosystem. The system of FIG. 4 may be used for adapting spectrum allocation for example for (but not limited to) 5G, 6G, and non-5G/non-6G systems in a dynamic environment. Herein a non-5G/non-6G system refers to a communication system not based on 5G nor 6G.

As shown in FIG. 4, a base station 104 (e.g., a 6G base station) continuously receives streaming data (e.g., spectrum characteristics 401) from multiple sources, such as one or more UEs 100, 102, and potentially one or more neighboring base stations 402 (e.g., a non-6G base station). The base station 104 analyzes this data to detect change points. If a change point is detected at the change point detection unit 403 (CPD=T), the GENM 220 generates model parameters and normalization statics (P&S) 225 to assist (and adapt) the BBM 210 in decision-making for one or more tasks, such as spectrum allocation, resource utilization (e.g., bandwidth allocation, power adjustment), and/or interference mitigation for the current input data pattern (situation). Otherwise, if no change point is detected (CPD=F), the BBM 210 continues its own online updates.

In other words, the GENM 220 enhances the BBM 210 by dynamically adapting the parameters (weights) of the BBM 210 based on contextual changes in the environment. More specifically, the GENM 220 receives as input a window of the data, and the GENM 220 generates the weights of the BBM 210 for this specific pattern (e.g., an increased interference or sudden user demand spikes). For example, after observing a new data segment, a window of newly observed data may be queried (as input) in the GENM 220, and the GENM 220 then outputs the parameters of the BBM 210, which should be used for the current scenario.

The BBM 210 may be a time series forecasting model. For the dynamic spectrum allocation, the input of the BBM 210 may comprise, for example, historical and/or real-time data on at least one of: temporal network traffic metrics (e.g., trends in traffic load, interference levels, signal quality, etc.), user mobility patterns (e.g., changes in user density or demand over time in specific areas), or spectrum utilization trends (usage patterns of frequency bands).

The output of the BBM 210 may comprise a short-term forecast and/or a long-term trend prediction of one or more of the above metrics (e.g., the output may be a prediction for the corresponding metric(s) provided as input to the BBM 210). These predictions allow for more sophisticated spectrum allocation strategies, such as proactive spectrum allocation and/or interference mitigation over time.

For example, for the proactive spectrum allocation, the BBM 210 may predict future spectrum needs based on observed trends (e.g., increasing traffic in a specific cell). Based on this prediction, the required spectrum may be allocated to regions or devices before congestion occurs.

As another example, for the interference mitigation over time, the BBM 210 may predict interference levels based on time-varying environmental factors (e.g., weather and/or user mobility). Based on this prediction, frequency bands or power levels of the radio access network may be adjusted (e.g., dynamically) to avoid predicted interference peaks.

The training of the BBM 210 may be based on the inference performed with the BBM 210 and its usage. Forecasting the inputs in the near future and based on that one can decide, for example, to increase the spectrum allocation for Cell A by 15 MHz and to decrease it for Cell B by 10 MHz in the next 10 minutes based on traffic trends. As another example, if high interference is predicted at 900 MHz in Region X, then allocation in this frequency band may be avoided for the next 5 minutes.

Adapting the BBM 210 (e.g., a TCN) may be necessary in these cases, because the operating conditions and data characteristics in the "proactive spectrum allocation" and "interference mitigation over time" are dynamic and may vary significantly over time or across different environments. For example, user behavior and traffic demand are not static and may change. The GENM 220 generates the parameters that the BBM 210 needs in each scenario, and thus ensures that the BBM 210 stays relevant, accurate, and efficient in its predictions in a real-time manner, rather than fine-tuning the BBM 210 in every situation (which takes time and hinders online adaptation).

In another embodiment, the BBM 210 and the GENM 220 may be comprised in a network function of a core network 110.

In another embodiment, the BBM 210 and the GENM 220 may be comprised in a network function executed in edge. Herein the term "edge" refers to computing infrastructure and services that are located close to the sources of data, as opposed to centralized data centers or cloud environments. This proximity reduces latency, increases speed of data processing, and can improve data security by localizing data analysis and storage. The edge serves as a bridge between remote computing resources and local devices, enabling faster responses and real-time data processing.

In another embodiment, the BBM 210 and the GENM 220 may be comprised in a network function executed in far edge. The "far edge" is a subset of edge computing that is situated even closer to the data source or the end-user than the above edge computing scenarios. Far edge is the edge computing infrastructure which is deployed in a location farthest from the cloud data center(s) and closest to the sources of data. Far edge may refer to environments that are directly on or near the devices generating or consuming the data, such as sensors, industrial machines, or smartphones. The far edge emphasizes the proximity to the data source, prioritizing minimal latency and immediate data processing.

In another embodiment, the BBM 210 and the GENM 220 may be comprised in a network function executed in extreme edge. Extreme edge computing refers to the endmost part of edge computing, wherein computational tasks and edge services are deployed on extreme edge devices, such as UEs. In other words, extreme edge means that devices may be deployed outside the edge computing server premises to offload upper-layer computing tasks. Extreme edge aims to speed up the processing, as well as to improve energy efficiency by preventing the exchange of useless data with external servers.

In another embodiment, the BBM 210 and the GENM 220 may be comprised in a network function executed in an edge computing device. An edge computing device refers to a physical device that provides computation, networking, and storage capabilities at the edge of the internet or within a local area network. These devices are designed to process or store data locally, closer to where data is generated or used, rather than sending data back and forth to a centralized cloud or data center. Edge computing devices may range from simple sensors and routers to more complex servers and specialized appliances, all of which are tailored to reduce latency, conserve bandwidth, and provide localized computing resources for specific applications. For example, edge computing devices may include far-edge devices or edge cloud components.

Far-edge devices are end-point devices located at the outermost boundary of the network, directly interfacing with users or the physical environment. Examples include Internet of Things (IoT) devices, sensors, smart appliances, and mobile handsets, which are capable of performing localized data processing, analytics, and decision-making tasks to reduce latency and bandwidth demands on central resources.

Edge cloud components comprise infrastructure elements that are part of or connected to the edge of the network, but not as localized as far-edge devices. These components, such as edge servers, micro data centers, and edge-specific networking equipment, provide enhanced computing power and storage capabilities closer to the data source than centralized data centers, thereby supporting a wide range of applications and services requiring real-time or near-real-time processing and responsiveness.

In another embodiment, the BBM 210 and the GENM 220 may be comprised in a network function executed in a cloud server (e.g., a public cloud).

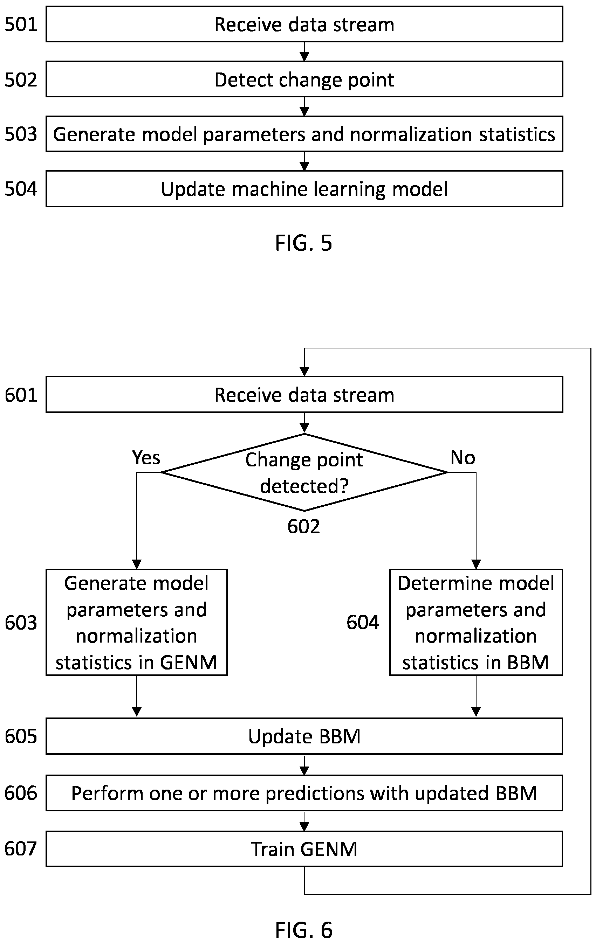

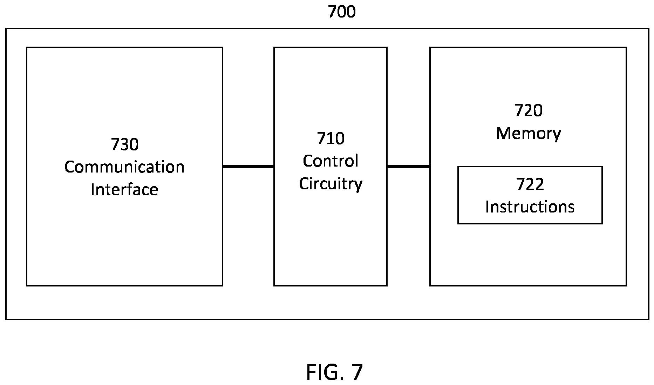

FIG. 5 illustrates a flow chart according to an example embodiment of a method for agile streaming data learning using generative artificial intelligence. The method may be performed by an apparatus 700 depicted in FIG. 7.

Referring to FIG. 5, in block 501, the apparatus 700 receives a data stream divided into segments with variable data patterns. The data stream comprises at least one of: network traffic metrics of a radio access network, spectrum occupancy statistics of the radio access network, interference levels observed in the radio access network, or signal strength measurements associated with the radio access network. For example, the data stream may comprise multivariate time series data.

The network traffic metrics refer to measurements that help to evaluate the performance and/or efficiency of the radio access network. The network traffic metrics may comprise, for example, at least one of: latency and/or throughput. Latency is the amount of time that it takes for data to travel from the source to the destination. Throughput is the amount of data transmitted successfully over the network in a given time period (or unit of time).

The spectrum occupancy statistics refer to measurements that indicate how different frequency bands are being used within the radio access network. The spectrum occupancy statistics may comprise, for example, frequency band utilization information. The frequency band utilization information indicates the extent to which specific frequency bands are occupied by signals, which helps to understand the efficiency of spectrum usage and to identify opportunities for optimizing the allocation of frequencies to various services.

The interference levels refer to the amount of unwanted signals that disrupt communication in the radio access network (e.g., between UEs and base stations). These unwanted signals may come from various sources, such as other electronic devices, neighboring base stations, or environmental factors. High interference levels may degrade the quality of the network.

The signal strength measurements indicate the power level of a received signal at a device (e.g., UE or base station). Some examples of signal strength metrics include: reference signal received power (RSRP) and received signal strength indicator (RSSI).

The data stream may be received from at least one of: one or more user equipments 100, 102, one or more base stations 402, one or more cloud services, one or more network services, or one or more sensors.

In block 502, the apparatus 700 detects a change point in the data stream, the change point corresponding to a shift in the data patterns.

For example, the change point may be detected by using maximum margin regression and approximate entropy (e.g., as described above with reference to FIG. 3.

In block 503, the apparatus 700 generates, based on the detection, by utilizing a generative artificial intelligence model 220 (i.e., the GENM 220 described above), model parameters and normalization statistics 225 for a machine learning model 210 based on one or more previously learned segments of the data stream, the machine learning model 210 being configured at least to learn from the data stream. The machine learning model 210 may refer to the backbone model (BBM) described above.

The model parameters may comprise at least one of: weights and/or gradients.

The normalization statistics may comprise at least one of: mean and standard deviation, minimum and maximum scaling, logarithmic scaling, or n-root scaling.

The generative artificial intelligence model 220 may be configured or caused to generate the model parameters and the normalization statistics 225 based on an input window 221 representative of a segment of the data stream following the change point, by recalling previously learned model parameters and normalization statistics for the one or more previously learned segments with a similar data pattern as a data pattern of the segment following the change point (e.g., as described above with reference to FIG. 2).

The generative artificial intelligence model 220 may be configured to cluster the model parameters and the normalization statistics 225 within a latent space 223 of the generative artificial intelligence model 220 (e.g., as described above with reference to FIG. 2).

The generative artificial intelligence model 220 may comprise, for example, a conditional variational autoencoder, or a generative adversarial network.

In block 504, the apparatus 700 updates the machine learning model 210 based on the model parameters and the normalization statistics 225 generated with the generative artificial intelligence model 220.

The updating may comprise integrating the model parameters and the normalization statistics 225 generated by the generative artificial intelligence model 220 with previous model parameters and normalization statistics of the machine learning model 210. For example, the integrating may be done with weighted averaging (e.g., as described above with reference to FIG. 2) or simple averaging.

Alternatively, the machine learning model 210 may be updated by using only the newly generated model parameters and normalization statistics (i.e., without integrating them with the previous model parameters and normalization statistics).

The machine learning model 210 may be configured or caused to predict one or more future time points in the data stream based on previously learned segments of the data stream.

The apparatus 700 may perform one or more predictions with the updated machine learning model 210. For example, the one or more predictions may be associated with dynamic spectrum allocation for a radio access network (e.g., as described above with reference to FIG. 4), wherein the data stream may comprise at least information on spectrum characteristics associated with the radio access network.

The one or more predictions comprise at least one of: one or more predicted network traffic metrics of the radio access network, one or more predicted occupancy statistics of the radio access network, one or more predicted interference levels expected in the radio access network, one or more predicted signal strength measurements associated with the radio access network, one or more frequency bands for dynamic spectrum allocation, a user prioritization for the dynamic spectrum allocation, or a load balancing recommendation for the dynamic spectrum allocation.

The one or more predicted network traffic metrics refer to the forecasted value(s) of one or more network key performance indicators, such as latency and/or throughput. These predictions help to anticipate future network conditions and to make proactive decisions to optimize the performance and resource allocation in the radio access network.

The one or more predicted occupancy statistics refer to the forecasted value(s) of how different frequency bands will be utilized in the future. These predictions help to anticipate future spectrum usage and to make informed decisions about resource allocation and management in the radio access network.

The one or more predicted interference levels refer to the forecasted value(s) of interference that are expected to be experienced in the radio access network. By anticipating future interference levels, the interference in the radio access network can be mitigated in a proactive manner.

The one or more predicted signal strength measurements refer to the forecasted value(s) of signal strength that one or more devices (e.g., UEs and/or base stations) in the radio access network are expected to experience in the future. By anticipating the signal strength levels, the performance of the radio access network can be optimized in a proactive manner to ensure better connectivity and service quality for users.

The one or more frequency bands for dynamic spectrum allocation refer to the specific ranges of radio frequencies that can be dynamically assigned to different users (i.e., UEs) or services based on real-time demand and network conditions. This helps in optimizing the overall performance and capacity of the radio access network.

The user prioritization refers to the process of assigning different levels or priority to different users (or UEs), when allocating radio frequencies in the radio access network. This prioritization ensures that users with high priority, such as emergency services or premium subscribers, receive better access to the spectrum (e.g., during high-demand periods). The allocation may be dynamically adjusted based on real-time conditions and user needs to optimize the overall efficiency and performance of the radio access network.

The load balancing recommendation refers to a suggestion or strategy aimed at distributing network traffic in the radio access network more evenly across available resources (e.g., frequency bands). This helps to prevent any single resource from becoming overloaded, ensuring a more efficient and reliable network performance. By balancing the load according to the recommendation, the radio access network can handle higher data rates and provide better service quality to users.

The apparatus 700 may train the generative artificial intelligence model 220 based on the model parameters and normalization statistics 225 generated with the generative artificial intelligence model 220 (e.g., as described above with reference to FIG. 2).

FIG. 6 illustrates a flow chart according to an example embodiment of a method for agile streaming data learning using generative artificial intelligence. The method may be performed by an apparatus 700 depicted in FIG. 7.

Referring to FIG. 6, in block 601, the apparatus 700 receives a data stream divided into segments with variable data patterns. In other words, the data arrives in a streaming fashion, and the different data segments have different data patterns. The data may be processed in data windows with an arbitrary size. There is a machine learning model (backbone model) 210 in the front line (as a model that performs learning and can be used for forecasting and prediction) that is supposed to learn the data as it arrives. The machine learning model (backbone model) 210 acts as the primary decision-making component, and it may process input data collected from real-time observations of a radio access network.

For example, the data stream (input data) may comprise at least one of: network traffic metrics of the radio access network, spectrum occupancy statistics of the radio access network, interference levels observed in the radio access network, or signal strength measurements associated with the radio access network. In other words, these input(s) are formatted as a data stream.

For example, the data stream may comprise multivariate time series data. Multivariate time series data refers to a collection of observations capturing multiple variables or measurements, recorded sequentially over time across several periods. A given variable may represent a distinct dimension of the data, and all variables may be monitored over the same time intervals.

The data stream may be received from at least one of: one or more user equipments 100, 102, one or more base stations 402, one or more cloud services, one or more network services, or one or more sensors.

In block 602, the apparatus 700 determines whether a change point is detected in the data stream, the change point corresponding to a shift in the data patterns.

For example, maximum margin regression (MMR) and approximate entropy (ApEn) may be used for the change point detection (e.g., as described above with reference to FIG. 3).

In block 603, based on detecting the change point (block 602: yes), the apparatus 700 generates, based on the detection, by utilizing a generative artificial intelligence model 220 (i.e., the GENM 220 described above), model parameters and normalization statistics 225 for the machine learning model (backbone model) 210 based on one or more previously learned segments of the data stream, the machine learning model 210 being configured at least to learn from the data stream.

The generative artificial intelligence model 220 may be configured or caused to generate the model parameters and the normalization statistics 225 based on an input window 221 representative of a segment of the data stream following the change point, by recalling previously learned model parameters and normalization statistics for the one or more previously learned segments with a similar data pattern as a data pattern of the segment following the change point.

The data from different data patterns may come in different time intervals. For example, data from a first data pattern may be received at a first time interval, and then data from a second data pattern may be received later at a second time interval, and then data from the first data pattern may be received again later at a third time interval. In this case, when the first data pattern is observed in the third time interval, the model parameters and normalization statistics may be recovered (recalled) from the first time interval (where the first data pattern was observed earlier), rather than continuing from the second time interval where a different data pattern (the second data pattern) was observed.

The generative artificial intelligence model 220 may be configured to cluster the model parameters and the normalization statistics 225 within a latent space 223 of the generative artificial intelligence model 220.

The generative artificial intelligence model 220 may comprise, for example, a conditional variational autoencoder (e.g., as shown in FIG. 2), or a generative adversarial network.

A generative adversarial network (GAN) is a class of machine learning frameworks comprising two artificial neural networks: the generator and the discriminator, which are trained simultaneously through adversarial processes. The generator's role is to produce data that is indistinguishable from real data, while the discriminator's role is to accurately distinguish between the generator's fabricated data and genuine data from a given dataset. Through iterative training, the generator improves its capability to produce data increasingly similar to the real data, while the discriminator enhances its ability to differentiate between real and generated data. This adversarial training process continues until the discriminator can no longer reliably distinguish between the fabricated data and the real data, indicating that the generator produces highly realistic data.

The model parameters may comprise at least one of: weights and/or gradients.

Weights are the parameters of the machine learning model 210 that are learned from the training data. They determine the strength of the influence that each input feature has on the model's predictions. In a neural network, for example, weights may be used to connect neurons across different layers, and adjusting these weights allows the network to learn complex patterns and relationships in the data. The goal of the training process is to find the optimal set of weights that minimizes the difference between the predicted outputs and the actual target values in the training data.

Gradients represent the partial derivatives of the loss function (a measure of model error) with respect to each weight in the machine learning model 210. In simpler terms, a gradient indicates how much the loss function changes if a weight is slightly adjusted. Gradients are central to gradient-based optimization algorithms, such as gradient descent, which are used to minimize the loss function by iteratively adjusting the weights. During a given iteration, the gradient may be calculated for each weight, and the weight may be updated in the opposite direction of the gradient. This process may be repeated until the model converges to a set of weights that minimizes the loss, ideally leading to improved model performance.

The normalization statistics may comprise at least one of: mean and standard deviation, or minimum and maximum scaling, or logarithmic scaling, or n-root scaling.

In the context of normalization or scaling, using the mean and standard deviation refers to a technique called standardization or Z-score normalization. This technique involves rescaling the features of the data, so that they have the properties of a standard normal distribution with a mean of 0 and a standard deviation of 1.

The mean (or average) of a dataset is a measure of the central tendency of the data, calculated by summing all the values and then dividing by the count of the values. In the context of normalization, the mean may be used to center the data around 0. This is achieved by subtracting the mean value of each feature from all the data points for that feature.

The standard deviation measures the amount of variation or dispersion in a set of values. A low standard deviation indicates that the values tend to be close to the mean, while a high standard deviation indicates that the values are spread out over a wider range. In normalization, the standard deviation may be used to scale the data so that most of the values fall within a certain range (e.g., -1 to 1) around the mean. This is done by dividing the data (after it has been mean-centered) by the standard deviation of the feature.

Minimum and maximum scaling, which may also be referred to as min-max normalization, is a technique used to scale and normalize the range of feature values in data preprocessing. The goal is to transform the features to fall within a given range, such as [0, 1] or [-1, 1]. This scaling helps with the convergence of algorithms, makes the training process faster, and can also improve the performance of models, especially those sensitive to the scale of input data, such as neural networks and gradient-based optimization algorithms.

Logarithmic scaling involves applying a logarithm function to each data point in a dataset. For example, the base for the logarithm may be 10, but bases e (natural logarithm) and 2 may alternatively be used depending on the context. Logarithmic scaling may be useful for dealing with data that varies exponentially or geometrically. For example, in a dataset where values range from very small to very large, a logarithmic scale can compress the scale of the larger values while expanding the scale of the smaller values. This makes trends or patterns among the data points more visible and easier to interpret, especially in visual representations like charts or graphs.

N-root scaling, including square root (2nd root), cubic root (3rd root), and so on, involves taking the n-th root of each data point in a dataset. This type of scaling is a way to reduce the skewness of data, for example for right-skewed distributions where most of the data points are on the lower end of the scale with a long tail towards the higher end. By applying an n-root transformation, the data can be made more symmetrical, which simplifies analysis and visualization. For instance, square root scaling (taking the square root of each data point) may be used in contexts where the data includes squares or quadratic relationships. Cubic root and higher roots may be applied to manage data with even more extreme scales or distributions.

Alternatively, in block 604, if no change point was detected (block 602: no), then the model parameters and the normalization statistic may be determined and updated in the machine learning model 210 (backbone model) in an online fashion (dynamic updating using the newly arrived data).

In block 605, following block 603, the apparatus 700 updates the machine learning model 210 (backbone model) based on the model parameters and the normalization statistics 225 generated with the generative artificial intelligence model 220.

The previous model parameters and normalization statistics of the machine learning model 210 may be updated using the distribution that has learned and captured from similar data segments by the generative artificial intelligence model 220. An input window after the detected change point may be provided as input to the generative artificial intelligence model 220 to generate a concatenation of the model parameters and the normalization statistics. The previous model parameters and normalization statistics may be updated using the generated ones, for example through weighted averaging or simple averaging. That is, the updating may comprise integrating the model parameters and the normalization statistics 225 generated by the generative artificial intelligence model 220 with previous model parameters and normalization statistics of the machine learning model 210.

The machine learning model 210 may be configured or caused to predict one or more future time points in the data stream based on previously learned segments of the data stream. In other words, the machine learning model 210 may be used to perform data forecasting or any other required prediction.

In block 606, the apparatus 700 performs one or more predictions with the updated machine learning model 210. That is, the data stream is provided as input to the updated machine learning model 210, and the one or more predictions are received as output from the updated machine learning model 210 based on or in response to the input. In other words, the backbone model 210 may be used for look-ahead window prediction.

For example, the one or more predictions may be associated with dynamic spectrum allocation for a radio access network, wherein the data stream may comprise at least information on spectrum characteristics associated with the radio access network.

The one or more predictions may comprise at least one of: one or more predicted network traffic metrics of the radio access network, one or more predicted occupancy statistics of the radio access network, one or more predicted interference levels expected in the radio access network, one or more predicted signal strength measurements associated with the radio access network, one or more frequency bands for dynamic spectrum allocation, a user prioritization for the dynamic spectrum allocation, or a load balancing recommendation for the dynamic spectrum allocation.

In other words, the one or more predictions outputted by the updated machine learning model 210 may refer to forecasted future values of the input(s) mentioned above (that are comprised in the data stream). Alternatively, or additionally, the output may comprise predictive insights for dynamic spectrum allocation, such as the optimal frequency bands for allocation, user prioritization, and/or load balancing recommendations.

Based on the one or more predictions (i.e., the output of the machine learning model 210), the apparatus 700 (or a network controller) may allocate spectrum resources in the radio access network (e.g., to one or more UEs), leading to improved network performance.

In block 607, the apparatus 700 trains the generative artificial intelligence model 220 based on the model parameters and normalization statistics 225 generated with the generative artificial intelligence model 220 in block 603. In other words, the generative artificial intelligence model 220 is trained to learn from the model parameters and normalization statistics of the new segment.

Following block 607, the method may return to block 601 and continue from there. In other words, the method of FIG. 6 may be performed iteratively.

Thus, after observing each change point in the data stream, the backbone model parameters (output of the GENM 220) and a representative window of the previous data segment (input of the GENM 220) may be used to train the generative artificial intelligence model (GENM) 220. This process may happen every time when a new data segment (change point in the data stream) is observed. Incrementally, the generative artificial intelligence model 220 learns what are the optimal parameters of the machine learning model 210 (backbone model), which should be generated for each data segment.

The blocks and related functions described above by means of FIG. 5 and FIG. 6 are in no absolute chronological order, and some of them may be performed simultaneously or in an order differing from the described one. Other functions can also be executed between them or within them, and/or other rules applied. Some of the blocks or part of the blocks can also be left out or replaced by a corresponding block or part of the block.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

FIG. 7 illustrates an example of an apparatus 700 comprising means for performing one or more of the example embodiments (e.g., the method of FIG. 5 or FIG. 6) described above. For example, the apparatus 700 may be, or comprise, or be comprised in, a base station 104 of a radio access network, or a network function of a core network 110, or a network function executed in edge, or a network function executed in far edge, or a network function executed in extreme edge, or an edge computing device, or a cloud server. A cloud server is a virtual or physical server, hosted remotely by a cloud service provider, which can be accessed via an internet connection.

The apparatus 700 may comprise, for example, a circuitry or a chipset applicable for realizing one or more of the example embodiments described above. The apparatus 700 may be an electronic device or computing system comprising one or more electronic circuitries. The apparatus 700 may comprise a control circuitry 710 such as at least one processor, and at least one memory 720 storing instructions 722 which, when executed by the at least one processor, cause the apparatus 700 to carry out one or more of the example embodiments described above. Such instructions 722 may, for example, include computer program code (software). The at least one processor and the at least one memory storing the instructions may provide the means for providing or causing the performance of any of the methods and/or blocks described above.

In another embodiment, the means may be a network function of the core network 110, edge, far edge or extreme edge, or the means may be network function virtualization infrastructure.

The processor is coupled to the memory 720. The processor is configured to read and write data to and from the memory 720. The memory 720 may comprise one or more memory units. The memory units may be volatile or non-volatile. It is to be noted that there may be one or more units of non-volatile memory and one or more units of volatile memory or, alternatively, one or more units of non-volatile memory, or, alternatively, one or more units of volatile memory. Volatile memory may be for example random-access memory (RAM), dynamic random-access memory (DRAM) or synchronous dynamic random-access memory (SDRAM). Non-volatile memory may be for example read-only memory (ROM), programmable read-only memory (PROM), electronically erasable programmable read-only memory (EEPROM), flash memory, optical storage or magnetic storage. In general, memories may be referred to as non-transitory computer readable media. The term "non-transitory," as used herein, is a limitation of the medium itself (i.e., tangible, not a signal) as opposed to a limitation on data storage persistency (e.g., RAM vs. ROM). The memory 720 stores computer readable instructions that are executed by the processor. For example, non-volatile memory stores the computer readable instructions, and the processor executes the instructions using volatile memory for temporary storage of data and/or instructions.

The computer readable instructions may have been pre-stored to the memory 720 or, alternatively or additionally, they may be received, by the apparatus, via an electromagnetic carrier signal and/or may be copied from a physical entity such as a computer program product. Execution of the computer readable instructions causes the apparatus 700 to perform one or more of the functionalities described above.

The memory 720 may be implemented using any suitable data storage technology, such as semiconductor-based memory devices, flash memory, magnetic memory devices and systems, optical memory devices and systems, fixed memory and/or removable memory.

The apparatus 700 may further comprise or be connected to a communication interface 730 comprising hardware and/or software for realizing communication connectivity according to one or more communication protocols. The communication interface 730 may comprise at least one transmitter (Tx) and at least one receiver (Rx) that may be integrated to the apparatus 700 or that the apparatus 700 may be connected to. The communication interface 730 may provide means for performing some of the blocks and/or functions (e.g., transmitting and receiving) for one or more example embodiments described above. The communication interface 730 may comprise one or more components, such as: power amplifier, digital front end (DFE), analog-to-digital converter (ADC), digital-to-analog converter (DAC), frequency converter, (de)modulator, and/or encoder/decoder circuitries, controlled by the corresponding controlling units.

The communication interface 730 provides the apparatus with communication capabilities to communicate in the wireless communication network. The communication interface 730 may, for example, provide a radio, cable or fiber interface to one or more bases stations 402 of the radio access network. The communication interface may further provide a radio interface to one or more UEs 100, 102.

It is to be noted that the apparatus 700 may further comprise various components not illustrated in FIG. 7. The various components may be hardware components and/or software components.

As used in this application, the term "circuitry" may refer to one or more or all of the following: a) hardware-only circuit implementations (such as implementations in only analog and/or digital circuitry); and b) combinations of hardware circuits and software, such as (as applicable): i) a combination of analog and/or digital hardware circuit(s) with software/firmware and ii) any portions of hardware processor(s) with software (including digital signal processor(s), software, and memory(ies) that work together to cause an apparatus, such as a mobile phone, to perform various functions); and c) hardware circuit(s) and/or processor(s), such as a microprocessor(s) or a portion of a microprocessor(s), that requires software (for example firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The techniques and methods described herein may be implemented by various means. For example, these techniques may be implemented in hardware (one or more devices), firmware (one or more devices), software (one or more modules), or combinations thereof. For a hardware implementation, the apparatus(es) of example embodiments may be implemented within one or more application-specific integrated circuits (ASICs), digital signal processors (DSPs), digital signal processing devices (DSPDs), programmable logic devices (PLDs), field programmable gate arrays (FPGAs), graphics processing units (GPUs), processors, controllers, micro-controllers, microprocessors, other electronic units designed to perform the functions described herein, or a combination thereof. For firmware or software, the implementation can be carried out through modules of at least one chipset (for example procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

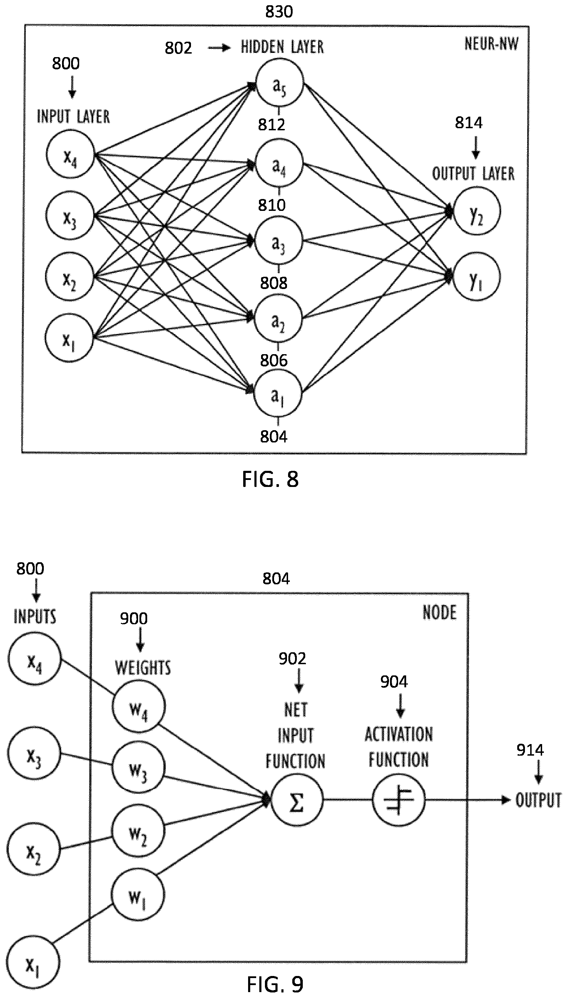

FIG. 8 illustrates an example of an artificial neural network 830 with one hidden layer 802, and FIG. 9 illustrates an example of a computational node 804. However, it should be noted that the artificial neural network 830 may also comprise more than one hidden layer 802. The artificial neural network 830 is one example of the machine learning model (backbone model) 210.

An artificial neural network (ANN) 830 comprises a set of rules that are designed to execute tasks such as regression, classification, clustering, and pattern recognition. The ANN may achieve such objectives with a learning/training procedure, where they are shown various examples of input data, along with the desired output. This way, the ANN learns to identify the proper output for any input within the training data manifold. Learning/training by using labels is called supervised learning and learning without labels is called unsupervised learning.

Deep learning (also known as deep structured learning or hierarchical learning) is part of a broader family of machine learning methods based on the layers used in the artificial neural network. A deep neural network (DNN) 830 is an artificial neural network comprising multiple hidden layers 802 between the input layer 800 and the output layer 814. Training of DNN allows it to find the correct mathematical manipulation to transform the input into the proper output, even when the relationship is highly non-linear and/or complicated. Deep learning may require a large amount of input data.

A given hidden layer 802 comprises nodes 804, 806, 808, 810, 812, where the computation takes place. As shown in FIG. 9, a given node 804 combines input data 800 with a set of coefficients, or weights 900, that either amplify or dampen that input 800, thereby assigning significance to inputs 800 with regard to the task that the algorithm is trying to learn. The input-weight products are added 902 and the sum is passed through an activation function 904, to determine whether and to what extent that signal should progress further through the neural network 830 to affect the ultimate outcome, such as an act of classification. In the process, the neural network learns to recognize correlations between certain relevant features and optimal results.

In the case of classification, the output of a DNN 830 may be considered as a likelihood of a particular outcome. In this case, the number of layers 802 may vary proportional to the number of the used input data 800. However, when the number of input data 800 is high, the accuracy of the outcome 814 is more reliable. On the other hand, when there are fewer layers 802, the computation might take less time and thereby reduce the latency. However, this highly depends on the specific DNN architecture and/or the computational resources available.

Initial weights 900 of the model can be set in various alternative ways. During the training phase, they may be adapted to improve the accuracy of the process based on analyzing errors in decision-making. Training a model is basically a trial-and-error activity. In principle, a given node 804, 806, 808, 810, 812 of the neural network 830 makes a decision (input*weight) and then compares this decision to collected data to find out the difference to the collected data. In other words, it determines the error, based on which the weights 900 are adjusted. Thus, the training of the model may be considered a corrective feedback loop.

For example, a neural network model may be trained using a stochastic gradient descent optimization algorithm, for which the gradients are calculated using the backpropagation algorithm. The gradient descent algorithm seeks to change the weights 900, so that the next evaluation reduces the error, meaning that the optimization algorithm is navigating down the gradient (or slope) of error. It is also possible to use any other suitable optimization algorithm, if it provides sufficiently accurate weights 900. Consequently, the trained parameters of the neural network 830 may comprise the weights 900.

In the context of an optimization algorithm, the function used to evaluate a candidate solution (i.e., a set of weights) is referred to as the objective function. With neural networks, where the target is to minimize the error, the objective function may be referred to as a cost function or a loss function. In adjusting weights 900, any suitable method may be used as a loss function. Some examples of a loss function are mean squared error (MSE), maximum likelihood estimation (MLE), and cross entropy.

As for the activation function 904 of the node 804, it defines the output 914 of that node 804 given an input or set of inputs 800. The node 804 calculates a weighted sum of inputs 800, possibly adds a bias, and then makes a decision as "activate" or "not activate" based on a decision threshold as a binary activation or using an activation function 904 that gives a nonlinear decision function. Any suitable activation function 904 may be used, for example sigmoid, rectified linear unit (ReLU), normalized exponential function (softmax), sotfplus, tanh, etc. In deep learning, the activation function 904 may be set at the layer level and applies to all neurons (nodes) in that layer. The output 914 is then used as input for the next node and so on until a desired solution to the original problem is found.

It will be obvious to a person skilled in the art that, as technology advances, the inventive concept may be implemented in various ways within the scope of the claims. The embodiments are not limited to the example embodiments described above, but may vary within the scope of the claims. Therefore, all words and expressions should be interpreted broadly, and they are intended to illustrate, not to restrict, the embodiments.

## Claims

1. An apparatus (700) comprising at least one processor (710), and at least one memory (720) storing instructions (722) that, when executed by the at least one processor (710), cause the apparatus (700) at least to:
receive a data stream divided into segments with variable data patterns, wherein the data stream comprises at least one of: network traffic metrics of a radio access network, spectrum occupancy statistics of the radio access network, interference levels observed in the radio access network, or signal strength measurements associated with the radio access network;
detect a change point in the data stream, the change point corresponding to a shift in the data patterns;
generate, based on the detection, by utilizing a generative artificial intelligence model (220), model parameters and normalization statistics for a machine learning model (210) based on one or more previously learned segments of the data stream, the machine learning model (210) being configured at least to learn from the data stream;
update the machine learning model (210) based on the model parameters and the normalization statistics generated with the generative artificial intelligence model (220); and
perform one or more predictions with the updated machine learning model (210), wherein the one or more predictions comprise at least one of: one or more predicted network traffic metrics of the radio access network, one or more predicted occupancy statistics of the radio access network, one or more predicted interference levels expected in the radio access network, one or more predicted signal strength measurements associated with the radio access network, one or more frequency bands for dynamic spectrum allocation, a user prioritization for the dynamic spectrum allocation, or a load balancing recommendation for the dynamic spectrum allocation.

2. The apparatus (700) according to claim 1, wherein the updating comprises integrating the model parameters and the normalization statistics generated by the generative artificial intelligence model (220) with previous model parameters and normalization statistics of the machine learning model (210).

3. The apparatus (700) according to any preceding claim, wherein the generative artificial intelligence model (220) is configured to generate the model parameters and the normalization statistics based on an input window representative of a segment of the data stream following the change point, by recalling previously learned model parameters and normalization statistics for the one or more previously learned segments with a similar data pattern as a data pattern of the segment following the change point.

4. The apparatus (700) according to any preceding claim, wherein the generative artificial intelligence model (220) is configured to cluster the model parameters and the normalization statistics within a latent space of the generative artificial intelligence model (220).

5. The apparatus (700) according to any preceding claim, wherein the generative artificial intelligence model (220) comprises a conditional variational autoencoder, or a generative adversarial network, and
wherein the machine learning model (210) comprises a deep artificial neural network.

6. The apparatus (700) according to any preceding claim, wherein the machine learning model (210) is configured to predict one or more future time points in the data stream based on previously learned segments of the data stream.

7. The apparatus (700) according to any preceding claim, further being caused to:
allocate spectrum resources in the radio access network based on the one or more predictions.

8. The apparatus (700) according to any preceding claim, further being caused to:
train the generative artificial intelligence model (220) based on the model parameters and normalization statistics generated with the generative artificial intelligence model (220).

9. The apparatus (700) according to any preceding claim, wherein the data stream comprises multivariate time series data.

10. The apparatus (700) according to any preceding claim, wherein the data stream is received from at least one of: one or more user equipments (100, 102), one or more base stations (104), one or more cloud services, one or more network services, or one or more sensors.

11. The apparatus (700) according to any preceding claim, wherein the apparatus (700) is caused to detect the change point by using maximum margin regression and approximate entropy.

12. The apparatus (700) according to any preceding claim, wherein the model parameters comprise at least one of: weights or gradients.

13. The apparatus (700) according to any preceding claim, wherein the normalization statistics comprise at least one of: mean and standard deviation, minimum and maximum scaling, logarithmic scaling, or n-root scaling.

14. The apparatus (700) according to any preceding claim, wherein the apparatus (700) comprises, or is comprised in, a base station (104) of the radio access network, or a network function of a core network, or a network function executed in edge, or a network function executed in far edge, or a network function executed in extreme edge, or an edge computing device, or a cloud server.

15. A method comprising:
receiving (501, 601) a data stream divided into segments with variable data patterns, wherein the data stream comprises at least one of: network traffic metrics of a radio access network, spectrum occupancy statistics of the radio access network, interference levels observed in the radio access network, or signal strength measurements associated with the radio access network;
detecting (502, 602) a change point in the data stream, the change point corresponding to a shift in the data patterns;
generating (503, 603), based on the detection, by utilizing a generative artificial intelligence model, model parameters and normalization statistics for a machine learning model based on one or more previously learned segments of the data stream, the machine learning model being configured at least to learn from the data stream;
updating (504, 605) the machine learning model based on the model parameters and the normalization statistics generated with the generative artificial intelligence model; and
performing (606) one or more predictions with the updated machine learning model, wherein the one or more predictions comprise at least one of: one or more predicted network traffic metrics of the radio access network, one or more predicted occupancy statistics of the radio access network, one or more predicted interference levels expected in the radio access network, one or more predicted signal strength measurements associated with the radio access network, one or more frequency bands for dynamic spectrum allocation, a user prioritization for the dynamic spectrum allocation, or a load balancing recommendation for the dynamic spectrum allocation.

16. A computer program comprising instructions which, when executed by an apparatus (700), cause the apparatus (700) to perform at least the following:
receiving a data stream divided into segments with variable data patterns, wherein the data stream comprises at least one of: network traffic metrics of a radio access network, spectrum occupancy statistics of the radio access network, interference levels observed in the radio access network, or signal strength measurements associated with the radio access network;
detecting a change point in the data stream, the change point corresponding to a shift in the data patterns;
generating, based on the detection, by utilizing a generative artificial intelligence model (220), model parameters and normalization statistics for a machine learning model (210) based on one or more previously learned segments of the data stream, the machine learning model (210) being configured at least to learn from the data stream;
updating the machine learning model (210) based on the model parameters and the normalization statistics generated with the generative artificial intelligence model (220); and
performing one or more predictions with the updated machine learning model (210), wherein the one or more predictions comprise at least one of: one or more predicted network traffic metrics of the radio access network, one or more predicted occupancy statistics of the radio access network, one or more predicted interference levels expected in the radio access network, one or more predicted signal strength measurements associated with the radio access network, one or more frequency bands for dynamic spectrum allocation, a user prioritization for the dynamic spectrum allocation, or a load balancing recommendation for the dynamic spectrum allocation.
